Europäisches Patentamt

European Patent Office

Office européen des brevets

(11) Veröffentlichungsnummer: **0 198 437**
**B1**

(12) # EUROPÄISCHE PATENTSCHRIFT

(45) Veröffentlichungstag der Patentschrift:
06.12.89

(51) Int. Cl.⁴: **B01J 29/04**

(21) Anmeldenummer: 86104973.2

(22) Anmeldetag: 11.04.86

(54) **Kristalliner Borosilikatzeolith-Katalysator, Verfahren zur Herstellung und Verwendung desselben.**

(30) Priorität: 16.04.85 DE 3513570

(43) Veröffentlichungstag der Anmeldung:
22.10.86 Patentblatt 86/43

(45) Bekanntmachung des Hinweises auf die Patenterteilung:
06.12.89 Patentblatt 89/49

(84) Benannte Vertragsstaaten:
BE CH DE FR GB IT LI NL

(56) Entgegenhaltungen:
EP-A- 0 133 938
US-A- 4 269 813

(73) Patentinhaber: BASF Aktiengesellschaft,
Carl-Bosch-Strasse 38, D-6700 Ludwigshafen(DE)

(72) Erfinder: Hoelderich, Wolfgang, Dr., Mannheimer
Strasse 18 c, D-6710 Frankenthal(DE)
Erfinder: Fischer, Rolf, Dr., Bergstrasse 98,
D-6900 Heidelberg(DE)
Erfinder: Fouquet, Gerd, Dr., Maxburgstrasse 2,
D-6730 Neustadt(DE)

## Beschreibung

Es ist bekannt, Aluminosilikatzeolithe als Katalysatoren für die Herstellung von Benzin und/oder Olefinen aus Methanol einzusetzen (US-A 4 035 430). Neben den Aluminiumsilikatzeolithen sind auch schon Borosilikatzeolithe bekannt als Katalysatoren für die Umwandlung von Methanol zu Olefinen, insbesondere Propylen. In US-A 4 252 688 sind Pd-dotierte Aluminosilikatzeolithe als Hydrocrackkatalysatoren. Edelmetall-dotierte Aluminosilikatzeolithe werden auch für Isomerisierungsreaktionen genutzt (US-A 3 856 872).

Mit Seltenen Erden, wie La-dotierte Aluminosilikatzeolithe dienen als Crackkatalysatoren für die Umwandlung paraffinischer und naphthenischer Kohlenwasserstoffe (P.B. Venuto, E.T. Habib: Catal.-Rev.-Sci. Eng., 18(1), 1-150 (1978).

Es wurde nun gefunden, daß kristalline Borosilikatzeolithe ausgezeichnete katalytische Eigenschaften besitzen und sowohl als Hydrier- und Dehydrierungs-, als auch als Isomerisierungskatalysatoren geeignet sind, wenn sie mit mindestens je einem Platin- und einem Seltenen Erdmetall dotiert sind.

Ein besonders günstiger Katalysator enthält die Komponenten in folgenden Molverhältnissen:
$SiO_2/B_2O_3$ von 3-1200, bevorzugt 10-80,
$M_{2/n}O/B_2O_3$ von 0-3, bevorzugt 0-1,5
$H_2O/B_2O_3$ von 0-120 sowie einen Zusatz von 0,005-100 mmol Pd, bevorzugt 1-20 mmol und 0,005-200 mmol Ce, bevorzugt 1-50 mmol
wobei M ein Kation mit der Valenz n ist, bevorzugt ein Alkaliion.

Die Herstellung der kristallinen Borosilikatzeolith-Katalysatoren erfolgt durch Kristallisation von $SiO_2$ und $H_3BO_3$ in Gegenwart von einem aminhaltigen-, etherisch- oder alkoholisch-wäßrigen Medium, wobei in der Synthesemischung eine molare Zusammensetzung von $SiO_2/B_2O_3$ von 3-1200 und $M_{2/n}O/B_2O_3$ von 0-3 eingehalten wird und man im Temperaturbereich zwischen 80 und 200°C unter autogenem Druck solange rührt, bis die Kristallisation vollständig ist, die abfiltrierten Kristalle auswäscht, trocknet und calciniert und das erhaltene Produkt danach mit mindestens je einem Salz eines Platingruppeelementes und eines Seltenen Erdmetalls in wäßriger und/oder alkoholischer und/oder aminhaltiger Lösung dotiert.

Platingruppeelemente im Sinne der Erfindung sind die Metalle Pd, Pt, Rh, Ir, Ru und Os.

Unter den für die Dotierung verwendeten Metallen ist die Dotierung mit Palladium, Platin und Cer bevorzugt.

Ein mit Pd und Ce im Sinne des vorangehenden erfindungsgemäßen Verfahrens dotierter kristalliner Borosilikatzeolith-Katalysator (Beispiel) hat das folgende Röntgendiagramm:

| D | | $I/I^0$ |
|---|---|---|
| 10.9 | ±0,2 | 66 |
| 9.90 | | 45 |
| 7.39 | | 1 |
| 6.61 | | 3 |
| 6.28 | | 2 |
| 5.90 | | 12 |
| 5.50 | | 7 |
| 4.94 | | 8 |
| 4.55 | | 2 |
| 4.31 | | 3 |
| 3.79 | ±0,07 | 100 |
| 3.68 | | 42 |
| 3.61 | | 4 |
| 3.44 | | 2 |
| 3.29 | | 4 |
| 3.13 | | 10 |
| 3.02 | | 2 |
| 2.94 | | 7 |
| 2.71 | | 3 |
| 2.57 | | 0 |
| 2.46 | | 3 |
| 2.37 | | 3 |
| 1.98 | | 6 |
| 1.92 | | 1 |
| 1.90 | | 2 |
| 1.85 | | 1 |
| 1.74 | | 2 |

Die Aufnahme ist auf einem Diffraktometer mit Cu-Strahlung $K_\alpha$ und automatischem Divergenzspalt mit 40 kv/30 mA aufgenommen. Der Detektor ist ein Scintillationszähler. Die Aufnahme wurde mit einer Winkelgeschwindigkeit von 0,5° 2ϑ pro min durchgeführt.

Eine vorteilhafte Ausführungsform des Verfahrens besteht darin, daß man den Borosilikatzeolithen bei 90 bis 200°C unter autogenem Druck synthetisiert, indem man eine Borverbindung, wie $H_3BO_3$, mit einer Siliciumverbindung, vorzugsweise mit hochdispersem Siliciumdioxid in einer wäßrigen Aminlösung, insbesondere in einer wäßrigen 1,6-Hexandiamin- oder 1,3-Propandiamin- oder Triethylentetramin-Lösung mit und ohne Alkali- oder Erdalkalizusatz zur Reaktion bringt. Vorteilhaft verwendet man Amine, die zu isotaktischen Zeolithen, wie sie z.B. in EP-A 34 727 beschrieben sind, führen. Man kann bei dieser Reaktion aber anstelle einer wäßrigen Aminlösung auch eine etherische Lösung, z.B. mit Diethylenglykoldimethylether, oder eine alkoholische Lösung, z.B. mit 1,6-Hexandiol verwenden.

Ein nach diesem Verfahren hergestellter Borosilikatzeolith kann nach Isolierung, Trocknung bei 100 bis 160°C, vorzugsweise etwa 110°C, und Calcinierung bei 450 bis 550°C, vorzugsweise 500°C, gegebenenfalls auch ohne Bindemittel unter Zusatz von Verstrangungshilfsmitteln wie z.B. Hexaethylcellulose, Kartoffelstärke, Ameisensäure, Essigsäure, Oxalsäure, Salpetersäure, Ammoniak, Amine, Silicoester, Graphit zu Strängen oder Tabletten verformt werden und gegebenenfalls abermals bei 100 bis 160°C, vorzugsweise bei 110°C, getrocknet und bei 450 bis 550°C, vorzugsweise bei 500°C calciniert. Die Verformung des Zeolithen kann aber auch nach der Trocknung vor der Calcination stattfinden, so daß eine Calcinierung eingespart wird.

Man kann den Borosilikatzeolith nach Trocknung und Calcinierung auch mit einem Bindemittel im Verhältnis 90:10 bis 40:60 Gew.% zu Strängen oder Tabletten verformen. Als Bindemittel eignen sich verschiedene Aluminiumoxide, vorzugsweise Boehmit oder amorphe Aluminosilikate mit einem $SiO_2/Al_2O_3$-Verhältnis von 25:75 bis 95:5, vorzugsweise 75:25 oder Siliciumdioxid, vorzugsweise hochdisperses $SiO_2$ oder Gemische aus hochdispersem $SiO_2$ und hochdispersem $Al_2O_3$ oder hochdisperses $TiO_2$ sowie Tone. Nach der Verformung werden die Extrudate oder Preßlinge bei 110°C/16 h getrocknet und bei 500°C/16 h calciniert. Besonders vorteilhaft kann man die erfindungsgemäßen Katalysatoren dadurch herstellen, daß man den isolierten Borosilikatzeolith direkt nach der Trocknung verformt und erstmals nach der Verformung einer Calcinierung unterwirft. Aus den zu Strängen verformten Katalysatoren kann man durch Mahlen und Sieben Wirbelgut in der Größe von 0,1 bis 0,6 mm erhalten.

Liegt der Borosilikatzeolith nach der Herstellung nicht in der katalytisch bevorzugten aciden H-Form vor, sondern z.B. in der Na-Form, dann kann diese durch Ionenaustausch mit Ammoniumionen und anschließende Calcinierung oder durch Behandlung mit Säuren vollkommen oder partiell in die gewünschte H-Form übergeführt werden.

Die gemeinsame Dotierung des Borosilikatzeolithen mit Pd- und Ce-Salzen kann auf verschiedene Weise erfolgen. Im folgenden sind drei zweckmäßige Verfahrensweisen wiedergegeben:

a) Der unverformte Borosilikatzeolith kann nach seiner Trocknung und Calcination mit einer Pd-Salz-Lösung, z.B. einer ammoniakalischen $Pd(NO_3)_2$-Lösung bei 40 bis 100°C unter Rühren aufgeschlämmt werden. Nach Abfiltrieren und Trocknen kann das so gewonnene Produkt mit einer Ce-Salz-Lösung, z.B. einer wäßrigen $Ce(NO_3)_3$-Lösung behandelt werden. Nach dem Abfiltrieren, Trocknen bei etwa 110 bis 150°C und Calcinieren bei etwa 500 bis 550°C kann das mit Pd und Ce beladene Produkt mit oder ohne Bindemittel zu Strängen, Pellets oder Wirbelgut verarbeitet werden. Das Aufbringen von Palladium und Cer kann aber auch in einem Gang mit einer Pd-Salz und Ce-Salz enthaltenden Lösung erfolgen.

b) Der mit oder ohne Bindemittel verformte Borosilikatzeolith wird in Strängen oder Pellets in einer Kolonne vorgelegt. Darüber wird eine Pd-Salz-Lösung, z.B. eine ammoniakalische $Pd(NO_3)_2$-Lösung, bei leicht erhöhter Temperatur zwischen 30 und 80°C 15 bis 20 h im Kreislauf geleitet. Danach wird mit Wasser ausgewaschen, bis etwa 110 bis 150°C getrocknet und bei etwa 500 bis 550°C calciniert. Anschließend wird unter gleichen Bedingungen eine Ce-Salz-Lösung, z.B. eine wäßrige $Ce(NO_3)_3$-Lösung über die Formkörper geleitet. Nach Auswaschen mit Wasser wird der so beladene Borosilikatzeolith bei etwa 110 bis 150°C getrocknet und bei etwa 500 bis 550°C calciniert. Das Aufbringen von Palladium und Cer durch Ionenaustausch kann auch in einem Gang mit einer Pd-Salz und Ce-Salz enthaltenden Lösung vorgenommen werden.

c) Der mit oder ohne Bindemittel verformte Borosilikatzeolith wird mit einer Pd-/Ce-Salz-Lösung getränkt. Die so getränkten Stränge oder Pellets werden bei etwa 110 bis 150°C getrocknet und bei etwa 500 bis 550°C calciniert. Diese gemeinsame Pd-/Ce-Imprägnierung kann aber auch getrennt mit einer Zwischencalcinierung vorgenommen werden.

Bei den so hergestellten Pd/Ce-Borosilikatzeolith-Katalysatoren kann eine Nachbehandlung mit Wasserstoff und/oder Wasserdampf vorteilhaft sein.

Eine weitere Möglichkeit der Modifizierung besteht darin, daß man das zeolithische Material -verformt oder unverformt- einer Behandlung mit Säuren wie Salzsäure, Flußsäure und Phosphorsäure und/oder mit Wasserdampf unterwirft und danach das Palladium und Cer auf den Zeolithen aufbringt.

Die erfindungsgemäßen neuen Pd/Ce-Borosilikatzeolithe sind als Katalysatoren für Kohlenwasserstoffumwandlung wie Hydrierungen, Dehydrierungen und Isomerisierungsreaktionen sehr geeignet. So führt z.B. die Dehydrierung von Alkenylcyclohexenen an diesen Katalysatoren in guten Ausbeuten zu Alkylbenzolen. Die Umwandlung führt man vorzugsweise in der Gasphase bei Temperaturen von 100 bis 500°C, insbesondere bei 250 bis 400°C, durch. Die Belastung (WHSV) beträgt zweckmäßig 0,1 bis 20, vorzugsweise 0,5 bis 5 g Alkenylcyclohexen pro g Katalysator und Stunde. Man kann aber auch in der Flüssigphase, z.B. bei Temperaturen von 30 bis 300°C arbeiten. Das Verfahren kann kontinuierlich oder diskontinuierlich, bei normalem oder erhöhtem Druck, z.B. in einem Strömungsreaktor, Rührkessel oder Wirbelreaktor, durchgeführt werden. Nichtumgesetzte Alkenylcyclohexene oder Alkylcyclohexene können gegebenenfalls nach Umsetzung durch Destillation von den entstandenen Alkylbenzolen abgetrennt und erneut für die Umsetzung verwendet werden.

Nach einer Desaktivierung der erfindungsgemäßen zeolithischen Katalysatoren, die durch Koksabscheidung eintreten kann, kann man diese durch Abbrennen der Koksablagerung mit Luft oder mit einem Luft/$N_2$-Gemisch bei 400 bis 550°C, bevorzugt 500°C, in einfacher Weise regenerieren, wodurch sie ihre Anfangsaktivität zurückerhalten. Man kann auch durch eine partielle Verkokung (pre-coke) die Aktivität des Katalysators für ein Selektivitätsoptimum des gewünschten Reaktionsproduktes einstellen. Werden die organischen Reaktionen in Gegenwart von Gasen wie Wasserstoff, Stickstoff und Wasserdampf ausgeführt, so kann man damit auch die Produktzusammensetzung und die Standzeit der Katalysatoren beeinflussen. Im allgemeinen werden die Katalysatoren in Form von 2 bis 4mm Strängen, Tabletten mit 3 bis 5 mm Durchmesser, Pulver oder Wirbelkontakt von 0,1 bis 0,5 mm eingesetzt.

Das nachfolgende Beispiel veranschaulicht den Gegenstand der Erfindung.

Beispiel

Durch hydrothermale Synthese aus 640 g hochdisperser Kieselsäure ($SiO_2$), 122 g $H_3BO_3$, 8000 g einer wäßrigen Hexandiaminlösung (50:50 Gew.%) bei 170°C wird unter autogenem Druck in einem Rührautoklaven ein Borosilikatzeolith hergestellt. Nach Abfiltrieren und Auswaschen wird das kristalline Reaktionsprodukt bei 100°C/24 h getrocknet und bei 500°C/24 h calciniert. Man erhält einen Borosilikatzeolith vom Pentasiltyp, der 94,2 Gew.% $SiO_2$ und 2,3 Gew.% $B_2O_3$ enthält. Aus diesem Zeolithen werden 2,5 mm-Stränge hergestellt, bei 100°C getrocknet und bei 500°C/24 h calciniert.

100 g dieser Stränge werden mit einer Lösung, bestehend aus 15,5g einer 11 %igen ammoniakalischen $Pd(NO_3)_2$-Lösung und 13,3 g $Ce(NO_3)_3 \times 6\ H_2O$ in 80 g $H_2O$, getränkt, nach etwa 30 min am Rotationsverdampfer von überstehendem Wasser befreit, danach bei 130°C/2 h getrocknet und bei 540°C/2 h calciniert.

Der Katalysator enthält 1,48 Gew.% Pd, 3,5 Gew.% Ce.

An diesem Pd/Ce-Borosilikatzeolith-Katalysator wird d-Limonen in einem Rohrreaktor von 0,6 cm Innendurchmesser in der Gasphase unter isothermen Bedingungen bei 200°C und WHSV = 1,7 $h^{-1}$ zu p-Cymol in 83,6 %iger Selektivität vollständig umgesetzt. Als Nebenprodukte entstehen Methylisopropylcyclohexen und -cyclohexan.

**Patentansprüche**

1. Kristalliner Borosilikatzeolith-Katalysator auf Basis $SiO_2$ und $B_2O_3$, <u>dadurch gekennzeichnet</u>, daß der Katalysator mit mindestens je einem Platingruppeelement und einem Seltenen Erdmetall dotiert ist.

2. Kristalliner Borosilikatzeolith-Katalysator nach Anspruch 1, <u>gekennzeichnet durch</u> ein Molverhältnis von
$SiO_2/B_2O_3$ von 3-1200, bevorzugt 10-80,
$M_{2/n}O/B_2O_3$ von 0-3, bevorzugt 0-1,5 und
$H_2O/B_2O_3$ von 0-120 sowie einen Zusatz von
0,005-100 mmol Pd, bevorzugt 1-20 mmol und
0,005-200 mmol Ce, bevorzugt 1-50 mmol
wobei M ein Kation mit der Valenz n ist, bevorzugt ein Alkaliion.

3. Verfahren zur Herstellung eines kristallinen Borosilikatzeolith-Katalysators nach Anspruch 1, <u>dadurch gekennzeichnet</u>, daß man die Kristallisation des Borosilikatzeolithen in Gegenwart von aminhaltigen-, etherisch- oder alkoholisch-wäßrigen Medium aus $SiO_2$ und $H_2BO_3$ durchführt, wobei in der Synthesemischung eine molare Zusammensetzung von

$SiO_2/B_2O_3$ von 3-1200 und
$M_{2/n}O/B_2O_3$ von 0-3
eingehalten wird und man im Temperaturbereich zwischen 80 und 200°C unter autogenem Druck so lange rührt, bis die Kristallisation vollständig ist, die abfiltrierten Kristalle auswäscht, trocknet und calciniert und das erhaltene Produkt danach mit mindestens je einem Salz eines Platingruppeelements und eines Seltenen Erdmetalls in wäßriger und/oder alkoholischer und/oder aminhaltiger Lösung dotiert.

4. Verfahren nach Anspruch 3, <u>dadurch gekennzeichnet</u>, daß die Alkali-oder Erdalkaliionen vor der Dotierung ausgetauscht werden.

5. Verfahren nach Anspruch 3 und 4, <u>dadurch gekennzeichnet</u>, daß man den Katalysator mit Pd- und Ce-Salzen dotiert.

6. Verwendung des Katalysators nach Anspruch 1 bis 5 für Kohlenwasserstoffumwandlungen.

7. Verwendung des Katalysators nach Anspruch 1 bis 3, als Hydrier-, Dehydrier- und Isomerisierungskatalysator.

**Claims**

1. A crystalline borosilicate zeolite catalyst based on $SiO_2$ and $B_2O_3$, which is doped with one or more platinum group elements and one or more rare earth metals.

2. A crystalline borosilicate zeolite catalyst as claimed in claim 1, which has a molar ratio of
$SiO_2/B_2O_3$ of 3-1200, preferably 10-80,
$M_{2/n}O/B_2O_3$ of 0-3, preferably 0-1.5 and
$H_2O/B_2O_3$ of 0-120, and is doped with
0.005-100, preferably 1-20, millimoles of Pd and
0.005-200, preferably 1-50, millimoles of Ce,
where M is a cation having the valency n, preferably an alkali metal ion.

3. A process for the preparation of a crystalline borosilicate zeolite catalyst as claimed in claim 1, wherein the borosilicate zeolite is prepared by crystallizing $SiO_2$ and $H_2BO_3$ in the presence of an amine-containing aqueous medium, an ether-containing aqueous medium or an alcoholic aqueous medium, a molar ratio of
$SiO_2/B_2O_3$ of 3-1200 and
$M_{2/n}O/B_2O_3$ of 0-3
being maintained in the synthesis mixture, and stirring is carried out at from 80 to 200°C under autogenous pressure until the crystallization is complete, the crystals are filtered off, washed thoroughly, dried and calcined, and the resulting product is then doped with one or more salts of a platinum group element and one or more salts of rare earth metal in aqueous and/or alcoholic and/or amine-containing solution.

4. A process as claimed in claim 3, wherein the alkali metal ions or alkaline earth metal ions are exchanged prior to doping.

5. A process as claimed in either of claims 3 and 4, wherein the catalyst is doped with Pd salts and Ce salts.

6. Use of a catalyst as claimed in any of claims 1 to 5 for hydrocarbon conversion.

7. Use of a catalyst as claimed in any of claims 1 to 3 as a hydrogenation, dehydrogenation or isomerization catalyst.

**Revendications**

1. Catalyseur de zéolithe de borosilicate cristallin à base de $SiO_2$ et de $B_2O_3$, caractérisé en ce que le catalyseur est dopé avec au moins un élément du groupe du platine et au moins un métal des terres rares.

2. Catalyseur de zéolithe de borosilicate cristallin selon la revendication 1, caractérisé par des proportions molaires de
$SiO_2/B_2O_3$ de 3–1200, de préférence 10–80,
$M_{2/n}O/B_2O_3$ de 0–3, de préférence 0–1,5 et
$H_2O/B_2O_3$ de 0–120,
ainsi que par une addition de
0,005–100 mmol de Pd, de préférence 1–20 mmol et
0,005–200 mmol de Ce, de préférence 1–50 mmol,
où M est un cation de valence n, de préférence un cation alcalin.

3. Procédé de préparation d'un catalyseur de zéolithe de borosilicate cristallin selon la revendication 1, caractérisé en ce qu'on effectue la cristallisation de la zéolithe de borosilicate à partir de $SiO_2$ et $H_2BO_3$ en présence d'un milieu aqueux contenant une amine, éthéré-aqueux ou alcoolique-aqueux, en maintenant dans le mélange de synthèse une composition molaire de
$SiO_2/B_2O_3$ de 3–1200 et
$M_{2/n}O/B_2O_3$ de 0–3
et on agite sous pression autogène dans une gamme de température de 80 à 200°C jusqu'à ce que la cristallisation soit terminée, on lave les cristaux séparés par filtration, on les sèche, on les calcine et on dope ensuite le produit obtenu avec au moins un sel d'un élément du groupe du platine et au moins un sel d'un métal des terres rares en solution aqueuse et/ou alcoolique et/ou contenant une amine.

4. Procédé selon la revendication 3, caractérisé en ce que les ions alcalins ou alcalino-terreux sont échangés avant le dopage.

5. Procédé selon la revendication 3 ou 4, caractérisé en ce qu'on dope le catalyseur avec des sels de Pd et de Ce.

6. Utilisation du catalyseur selon les revendications 1 à 3 pour la transformation des hydrocarbures.

7. Utilisation du catalyseur selon les revendications 1 à 3 comme catalyseur d'hydrogénation, de déshydrogénation et d'isomérisation.